Europäisches Patentamt

(19) European Patent Office

Office européen des brevets

(11) Publication number: **0 092 331**
**B1**

(12) **EUROPEAN PATENT SPECIFICATION**

(45) Date of publication of patent specification: **10.06.87**

(21) Application number: **83301818.7**

(22) Date of filing: **30.03.83**

(51) Int. Cl.⁴: **F 16 H 25/22**

(54) **Ball-screw rack device.**

(30) Priority: **30.03.82 ES 264218 u**
**05.05.82 ES 511935**

(43) Date of publication of application:
**26.10.83 Bulletin 83/43**

(45) Publication of the grant of the patent:
**10.06.87 Bulletin 87/24**

(84) Designated Contracting States:
**AT BE CH DE FR GB IT LI LU NL SE**

(56) References cited:
**CH-A- 456 260**
**DE-B-2 061 101**
**DE-C- 343 556**
**FR-A-1 244 838**
**FR-A-2 226 884**
**FR-A-2 456 269**
**GB-A-1 236 572**
**GB-A-1 550 498**
**US-A-2 975 649**
**US-A-3 669 460**
**US-A-3 763 959**
**US-A-3 971 264**

(73) Proprietor: **SHUTON, S.A.**
**Poligono Industrial "GOIAIN" Apartado 654**
**Villarreal de Alava Vitoria (ES)**

(72) Inventor: **Solupe Zulaica, Ixidor**
**C/Chile 33**
**Alava (Vitoria) (ES)**
Inventor: **Lopez de Guerenu Murillo, Leonardo**
**C/Sanz-Enea, 15-A**
**Zarauz (Guipuzcoa) (ES)**
Inventor: **San Martin Gil, Juan Manuel**
**C/Sanz-Enea, 15-A**
**Zarauz (Guipuzcoa) (ES)**

(74) Representative: **Fisher, Bernard et al**
**Raworth, Moss & Cook 36 Sydenham Road**
**Croydon Surrey CR0 2EF (GB)**

Courier Press, Leamington Spa, England.

# 0 092 331

## Description

The present invention refers to a ball-screw rack device for converting a primary rotary motion produced by known means into a travel or linear movement of a carrying body or movable machine.

In components and heavy machine-tools a rack is generally used as a transmission element to replace the screw in such cases where due to the length and the diameter concerned, it is not possible to obtain with a screw the rigidity and the speeds required.

At present racks are generally being used in machines, such as vertical lathes, bridge-type punch-copiers, bridge-type millers, flexible machining systems, etc., with application of numerical control, double-pinion rack mechanisms and hydrostatic screw racks.

In double-pinion rack mechanisms, as their name shows, a double pinion is used with the object of compensating or eliminating the plays which occur in rack-and-pinion work. In this case each pinion is equipped with a motor, and so it is necessary to synchronise, by means of numerical control, the rotary motion of the two motors. This synchronisation is certainly difficult, and is very expensive owing to the interface which has to be applied in said numerical control. Moreover, the motors used necessitate using large operating powers in those components or machines with high loads, a disadvantage which is due to the high fraction coefficient in the running of the pinion with the rack, which results in turn in a temperature rise, jerky movements, etc. Double-pinion racks are disclosed in DE—A—343556 and USA—A—3763959.

In view of the large number of disadvantages involved in the application of the double-pinion rack in machines with numerical control, various manufacturers opted for the use of the hydrostatic screw rack.

The hydrostatic screw rack arises as a development of the rack-and-pinion system, and the disadvantages of play and high friction coefficient in the running of the rack-and-pinion system are resolved. However, the application of this other system gives rise to a series of new disadvantages, such as:

a) high oil consumption;
b) high energy consumption;
c) high temperatures which it is necessary to eliminate by the use of cooling systems;
d) the hydraulic pressure, being variable according to the temperature of the oil, makes the drive torque vary.

The technology of the Ball-Screw rack and its application in components and machine-tools involves a technological advance parallel to that which was previously achieved on changing over from the application of the conventional or trapezoidal screw to the ball screw.

The principle of operation of the ball-screw rack consists in the running of the balls between the helical groove of the rack and the helical groove of the screws, which is similar to bearings and to ball screws. The transmission of the axial force between the rack and the screw is not applied directly by friction as in the rack-and-pinion system, nor by sliding over a film of oil as in the hydrostatic screw rack, but through the balls, achieving minimum wear, high efficiency, lower energy consumption and maximum dependability of operation.

A ball-screw rack device for converting a primary rotary motion produced by known means into a travel movement of a carrying body or machine is known from FR—A—2 226 884. This known device comprising all features of the precharacterising part of claim 1, has a guide element for guidance of the carrying body or machine; a screwholder body which is secured to the carrying body or machine to be moved, and which moves on the upper portion of the guide element; a rack secured to the guide element and composed of a plurality of modular elements, the rack having an internal face shaped as a half-circumference with a helical or toothed groove formed therein; a screw pinion mounted on the rack and having a mating helical groove of the same pitch and angle as the helical or toothed groove of the rack, the screw pinion being connected to and accommodated in the movable screwholder body; a set of balls accommodated in close succession in the groove of the screw pinion and engageable in the groove of the rack for running engagement between the screw pinion and the rack; and external running means which are connected to the screw pinion and via which a drive torque is imparted to the assembly in such manner that the rotational motion imparted to the screw pinion causes, by means of the running engagement of the screw pinion and the rack the horizontal movement of the screw pinion and of the screwholder body connected to the latter and, consequently, of the carrying body or machine on the rack.

According to the present invention the known device of the immediately preceding paragraph is characterised in that the screw pinion is made up of two endless worms connected to one another longitudinally, the modular elements of the rack are adjustable relative to each other, the screwholder body is supported by runners which vary in number depending on the load capacity requirements, which are mounted on strips secured to the screwholder body and which run on tracks carried by the rack elements whereby alignment differences and plays are eliminated and the pitch of the modular elements of the rack is kept constant and the guide element is formed with flanges for the guidance of the carrying body or machine.

In one embodiment of the invention the tracks are arranged with bearing surfaces in planes inclined to both the horizontal and vertical planes through the axis of the screw pinion so as to transmit both axial or radial forces.

In another embodiment of the invention the tracks are each provided by two sets of tracks with the

2

# 0 092 331

bearing surfaces of one set parallel to the horizontal plane and the other set parallel to the vertical plane so that one set transmits the axial forces and the other set the radial forces.

With advantage, each section of rack has at its longitudinal ends a lower recess into which is screwed an adjusting screw which has its head abutting against the adjacent section and can be turned to achieve an exact setting of the spacing or dimensioning of the rack, all this being in order to achieve a constant engagement pitch which ensures accurate operation.

In a preferred ball-screw rack device incorporating the invention the rack elements, with the object of giving the rack a greater load capacity, have, in cross-section, in the portion of their surface which has to be in contact with the screw, a semi-circumferential profile, and the helical groove via which the balls circulate is cut into the resulting semicylindrical longitudinal surface, its pitch and angle depending on the weight to be moved.

The cross-section of the toothed helical groove cut on the semicylindrical longitudinal surface of the rack elements is made up of two quarter portions of two circumferences the centres of which are displaced transversely from one another in such manner as to form an ogival section.

The distance between the respective centres of the two circumferences, the corresponding radii of the latter and the diameter of the balls are in a direct relation with the predetermined load to be transferred.

The screwholder body which is secured to the carrying body to be moved has also, in cross-section, in the portion of its surface which has to be in contact with the screw, a semi-circumferential profile, being composed longitudinally of a single piece.

The body of each of the two worms which make up the screw pinion is composed of a shaft which is integral with a keyed outer casing sleeve into the cylindrical outer surface of which is cut the helical groove via which circulate the balls, which are in contact in their lower portion with the mating toothed groove cut into the rack elements and, in the whole of the remainder of the periphery of the screw pinion, with a facing or cylindrical surface which is formed in the actual casing screwholder body and keeps the balls duly positioned in the screw pinion.

In the first and last helix of the spiral groove formed on each of the two worms which make up the screw pinion there is towards the interior a hole which, passing through the casing sleeve, communicates with a groove which is cut in a helicoid on the surface of the shaft and is enclosed by the actual casing and which by thus connecting the two holes forms the complementary inner branch of the closed ball-circuit, allowing the continuous recirculation of the balls from the end to the beginning of the spiral outer groove.

The device incorporates short lengths of tube which protrude from the holes opening to the spiral groove and are inserted in the holes of the first and last helixes of said groove, forming, without touching the casing facing of the half-body, baffles which direct the stream of balls to the corresponding hole which communicates with the inner helicoid or vice-versa.

An illustrative and non-limitative embodiment of the subject-matter of the invention is described below with reference to the accompanying drawings, in which:—

Figure 1 depicts a view of the ball-screw rack device according to the invention;

Figure 2 shows a view in longitudinal section of the ball-screw rack device according to the invention;

Figures 3 and 4 are end elevations showing alternative embodiments of the invention;

Figure 5 depicts a profile of the helix in the rack;

Figure 6 shows a ball recirculation system incorporated in each of the two worms which make up the screw pinion;

Figure 7 depicts the cross-section 7 of the keyed body of each of the two worms which make up the screw pinion;

Figure 8 depicts in cross-section the holes in the first and last helixes for the recirculation of the balls.

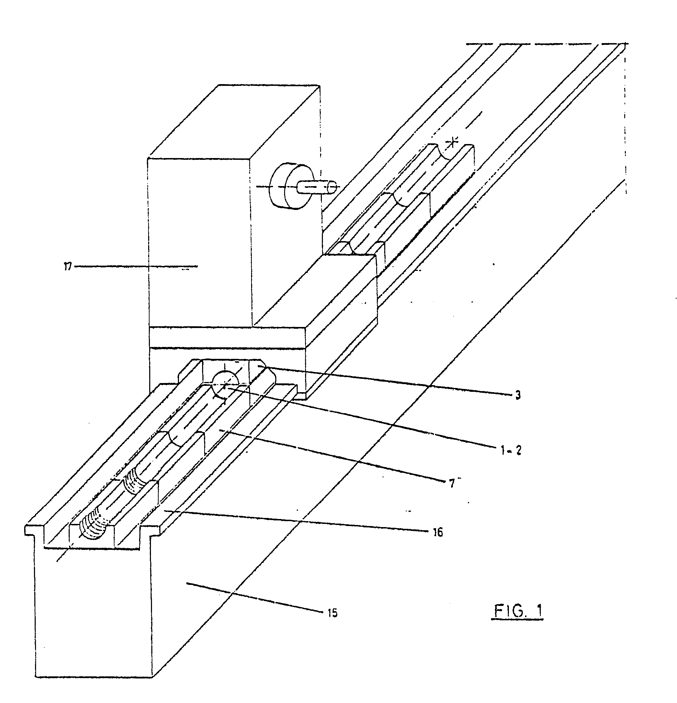

Fig. 1 depicts a ball-screw rack device according to the present invention. In this figure it may be observed that the screw pinion which is in two parts 1, 2 is partially surrounded by a screwholder body 3 in such manner that the imparting of a primary rotary motion to the screw pinion 1—2 causes the movement of the latter and of the screwholder body 3 on the rack 7. This rack 7 is composed of a series of elements disposed end to end which elements are fittable or removable as desired on the bed of a guide element 15 having flanges 16 for the guidance of the carrying body or machine 17 to be moved.

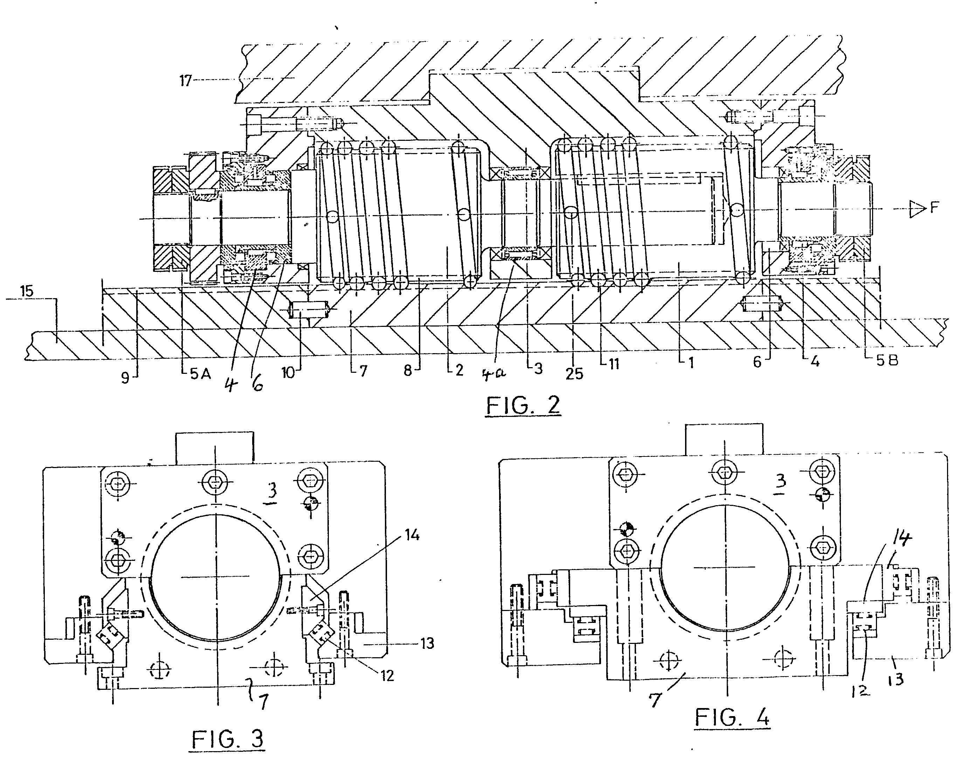

In Fig. 2 it may be appreciated in greater detail that the ball-screw rack device according to the invention is composed of:—

a) the two endless worms provided by the pinions 1 and 2 which are guided relative to one another with the object of being able to pre-load and thus obtain rigidity and eliminate play or looseness (said pre-loading depends on the drive torque required and on the life of the ball-screw rack) and have a helical groove or toothing 8 formed in them. Each of the worms is equipped with the ball recirculation system.

b) the screwholder body 3 in which the two endless worms 1 and 2 are fitted, using as complementary elements a series of high-precision bearings 4. The bearings 4 at the ends are radial-on-axial bearings, and it is possible to use a radial bearing 4a between the two worms (this depends on the distance in each case between the two end bearings 4). Also used as auxiliary or complementary elements are nuts 5A, 5B for the securing of the subassembly and retainers 6 for preventing the admission of dirt into the bearings. Their outer geometrical shape is similar to that of a parallelepiped and the inner portion is hollow and half-round in shape. Their geometrical shape is variable according to the requirements in each case.

c) the rack 7, the shape or external geometry of which is variable according to the requirements of

3

# 0 092 331

adaptation or mounting on the machine which has to be installed. Its shape is more or less parallelepipedic, with mounting flanges. This rack bears a lining in the shape of a half-circumference which has a helical or toothed groove 9 formed in it. The shape and pitch of this toothing are the same as those of the toothing or helical groove of the worms. This rack 7 is composed of modular elements, and bolts, cylindrical pins 10 or adjusting screws are used as spacers between adjacent modules, with the object of obtaining the required degree of precision in the resulting pitch.

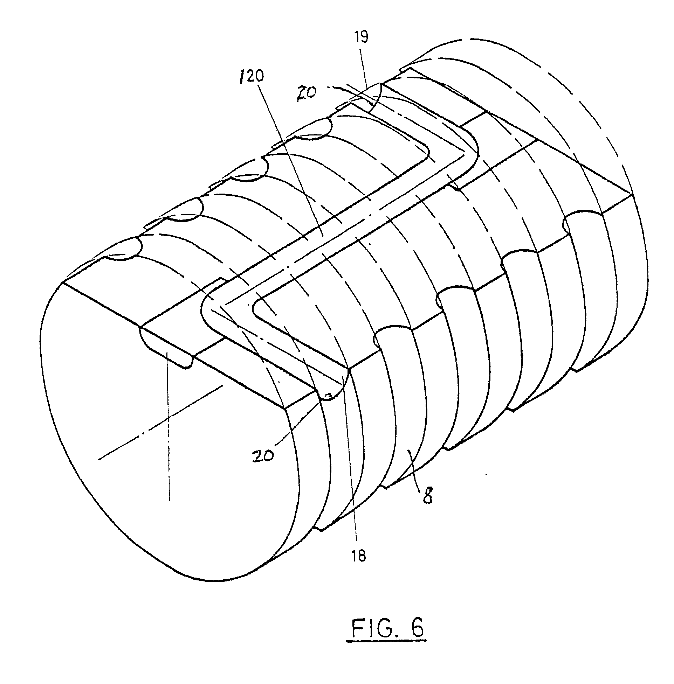

d) A plurality of balls 11 which run between the helical groove 8 of the worms and the helical groove 9 of the rack 7. The recirculation of the balls takes place via a recirculation system provided in the screws 1, 2, as seen in Figs. 6 to 8.

Fig. 3 depicts a set of runners 12 which are a variable number depending on the load capacity requirements. The runners 12 are mounted on strips or supports 13 which are in turn secured to the screwholder body 3. These runners 12 run on tracks 14 which are supported by the rack 7.

These tracks 14 which extend longitudinally of the machine may be angular or inclined as shown in Fig. 3, i.e. arranged with their bearing surfaces in planes inclined to both the horizontal and vertical planes through the axis of the screw 1, 2 so as to transmit both axial and radial forces. Alternatively, two sets of tracks 14 may be provided as shown in Fig. 4 with the bearing surfaces of one set parallel to the horizontal plane and the bearing surfaces of the other set parallel to the vertical plane so that one set transmits the axial forces and the other the radial forces. We thus obtain a self-contained assembly for installation or mounting on a machine, thus obviating complexities. In its turn, the rigidity of the mechanism is much greater than that of the transmission elements for converting circular motion into linear motion or vice-versa known at present.

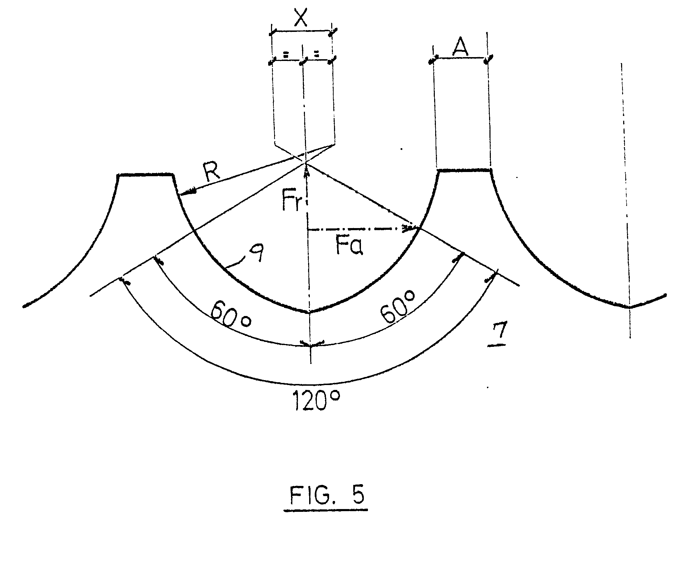

Fig. 5 shows the ogival cross-section of the toothing 9 of the rack elements 7 which has been designed with a ball contact angle of 60°. The toothing 8 of the worms 1, 2 has the same ogival cross-section.

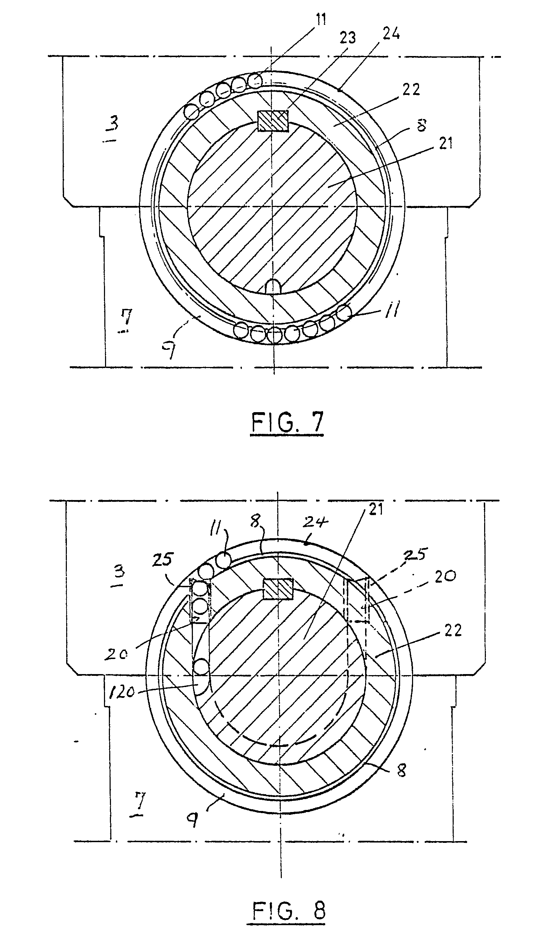

Fig. 6 shows a ball recirculation system which incorporates the screw device according to the invention. As can be seen in Figs. 7 and 8, the screw pinion comprises a shaft 21 having an outer casing sleeve 22 joined thereto by a key 23. The helical groove 8 is formed in the casing sleeve 22. As may be observed in Fig. 6, in the first or leading turn 18 of the helix 8 and in the last turn of the helix 8 of the spiral groove of the screw pinion there is provided towards the base a hole 20 which passes through the casing sleeve 22 (Fig. 7 and 8) and communicates with a groove 120 which is cut in a helicoid on the surface of the shaft 21. The groove 120 is enclosed by the casing sleeve 22 and connects the two holes 20 to form the complementary inner branch of the closed ball-circuit, thus allowing the continuous recirculation of the balls from the end to the beginning of the spiral outer groove 8.

Fig. 7 shows how the body of each of the two worms which make up the screw pinion is composed of the shaft 21 and the outer casing sleeve 22 joined to the shaft by key 23. Said figure shows how outer surfaces of the balls 11 contact a facing or smooth cylindrical surface 24 formed in the actual screwholder body 3 when travelling in that part of the groove 8 above the horizontal diametrical plane, the surface 24 serving to retain the balls 11 in that part of the groove 8. When travelling in that part of the groove 8 below the horizontal diametral plane, the balls 11 are engaged between the grooves 8 and 9.

Fig. 8 shows, in cross-section, the holes 20 which, passing through the casing sleeve 22, provide communication between the helicoid groove 120 to close the ball circuit. Also shown are short lengths of tube 25 which are inserted into the holes 20 which protrude therefrom without fouling the facing or surface 24. The outer ends of these tubes 25 are configured to form baffles which guide the circulating balls 11 into the holes 20.

In the design of the ball-screw rack there are two very important concepts to be taken into account, namely:

a) Overall rigidity,

b) angle of contact of the helix profile.


a) Overall rigidity

Owing to the great loads which the ball-screw rack has to withstand it is wholly necessary that the assembly of the screwholder body be of great rigidity. For this reason it has been necessary to select a form of design with screw preloading capacity and thus obtain the rigidity which is required in each case.

In Fig. 2 we have a longitudinal section of the screwholder body and of the rack. In said section we can see the three bearing points or supports with their corresponding bearings 4 and the two screws 1, 2. Screw 1 is guided and is movable relative to screw 2 on the left, with the object of being able to preload both screws relative to the rack. The preloading is by extension of the screws.


Rigidity

The value of the rigidity corresponds to the axial figure of the screw relative to the shaft under conditions of load.

It is necesary to consider the other values which affect the total rigidity of the machine or assembly which contains the ball-screw rack.

The total rigidity of a ball-screw rack assembly is the sum of various individual rigidities (ball-screw rack, ends of the screws, etc.). The influence of all these factors have to be taken into consideration.

4

# 0 092 331

Axial rigidity of a ball-screw rack
This is made up of the following factors:

— $R_B$ Axial rigidity in the ball contact zone.
— $R_{Hb}$ Rigidity of the screw in the ball contact zone.
— $R_{Ha}$ Rigidity of the screw between supports.

Axial rigidity in the ball contact zone
The calculation has been based on Hertz's pressure formula:

$$R_B = \frac{Fm}{\delta b} \text{(Ball deformation)}$$

Rigidity of the screw in the ball contact zone $R_{Hb}$

$$R_{Hb} = 0.6 \sim 0.8 \times R_b \text{ (N/µm)}$$

Rigidity of the screw between supports
The rigidity of the screw between supports is calculated as a function of its length and of the supports. There are various mounting possibilities which have been grouped into two fundamental types:
Rigid mounting at only one end:

$$R_{Ha} = \frac{A \times E}{L \times 10^3} \text{(N/µm)}$$

Rigid mounting at both ends:

$$R_{Ha} = \frac{4. \; A \times E}{L \times 10^3} \text{(N/µm)}$$

A = Section of the screw (mm²).
E = Modulus of elasticity $21 \times 10^4$ (N/mm²).
L = Length between supports (mm).

Total rigidity of the ball-screw rack

$$\frac{1}{R} = \frac{1}{R_{Ha}} + \frac{1}{R_b} \text{(N/µm)}$$

b) Angle of contact of the helix profile
The ogival profile of the helix on the rack and on the screws has been designed with a ball contact angle which is 60° according to Fig. 5.
As the rack elements are half-round parts, i.e. like nuts split by a diametral plane, their dynamic and static load capacities are smaller relative to those of a complete nut, owing to the consequent smaller number of balls bearing the load. For said reason, the aforesaid profile of 60° brings about an increase in the load capacities and logically an increase in the rigidity of the ball contact zone.
In its turn, this application of the contact angle makes it possible to obtain an improvement in the ratio of the component forces:

$$Fr = Fa . \tan 30° = 57.7\% \; Fa$$

Therefore, as the radial force/axial force ratio is 57.7%, the result is minimal upward force, with the consequent achievement of more rational operation and design with respect to the runners and to the assembly in general.
By the design specified in Figs. 3 and 4 we obtain in its turn a self-alignment in the longitudinal, transverse and vertical directions such as to obviate the subsequent securing of the screwholder body to the element to be moved, thus simplifying the setting up of the screw rack assembly.
So that the element to be moved is drawn along by the screwholder body 3 in the longitudinal direction of run of the rack, there has been designed in the rear portion of the screwholder body 3 a type of guide of which examples are shown in Figs. 2, 3 and 4 which is rectangular in shape and the design of which may vary according to adaptation requirements in each case.

5

# 0 092 331

Static load Co

This is the axial load, perpendicular to the contact surface with the balls and crest of threads, which brings about a permanent deformation of 0.0001 mm of the ball diameter when applied to a screw rack at rest. The table of values specifies the static loads by diameter and pitch which we have taken as reference.

Dynamic load C

This is the constant and unidirectional concentric axial load at which a group of apparently identical ball screw racks can withstand a service life of one million revolutions. The table of values specifies the dynamic loads by diameter and pitch which we have taken as reference.

Mean load/mean speed

When the load applied is constant there are no problems, but when the loads and speeds are variable the mean values of load Fm and of revolutions Nm have to be used for the calculation of service life.

With variable speed the mean speed Nm is equal to:

$$Nm = N_1 \times \frac{q_1}{100} + N_2 \times \frac{q_2}{100} + N_3 \times \frac{q_3}{100} + \ldots N_m \times \frac{q_n}{100} \, min^{-1}$$

With variable load and constant speed the mean load Fm is equal to:

$$Fm = \sqrt{F_1{}^3 \times \frac{q_1}{100} + F_2{}^3 \times \frac{q_2}{100} + F_3{}^3 \times \frac{q_3}{100} + \ldots Fn^3 \times \frac{q_n}{100}} \, N$$

With variable load and variable speed the mean load Fm is equal to:

$$Fm = \sqrt{F_1{}^3 \times \frac{N_1}{Nm} \times \frac{q_1}{100} + F_2{}^3 \times \frac{N_2}{Nm} \times \frac{q_2}{100} + \ldots Fn^3 \times \frac{Nm}{Nm} \times \frac{q_n}{100}} \, N$$

If the load variation is simple, apply the following formula to determine the mean load:

$$Fm = \frac{Fmin + 2\ Fmax}{3}$$

Service life

The nominal service life of a ball-screw rack is expressed as the number of revolutions (or as the number of hours if the revolutions are constant) which are expected to be reached or exceeded by at least 90% before the first signs of fatigue in the material become visible.

The service life is expressed as L or Lh according to whether it is in revolutions or in hours of operation.

Calculation of load/service life

Life as number of revolutions:
$$L = \left(\frac{C}{Fm}\right)^3 \times 10^6$$

Service life in hours:
$$Lh = \frac{L}{60 \times Nm}$$

Hours of operation of the machine:

$$Lh \times \frac{Period\ of\ machine\ operation}{Period\ of\ ball\text{-}screw\ rack\ operation}$$

L = Nominal service life (revolutions).
Lh = Nominal service life (hours).
C = Dynamic load capacity (N).
Fm = Mean load (N).
Nm = Mean revolution ($min^{-1}$).

6

## TABLES OF VALUES
### (This table is non-limitative and is given by way of example)

| Dp | P | Ball dia. | Dynamic load C (N) No. of circuits | | | | Static load Co (N) No. of circuits | | | |
|----|---|-----------|---|---|---|---|---|---|---|---|
| | | | 3 | 4 | 5 | 6 | 3 | 4 | 5 | 6 |
| 120 | 20 | 9.525 | 90.000 | 108.000 | 123.000 | 132.000 | 280.000 | 374.000 | 467.000 | 561.000 |
| 160 | 20 | 9.525 | 100.000 | 121.000 | 138.000 | 148.000 | 386.000 | 515.000 | 643.000 | 772.000 |
| 200 | 20 | 9.525 | 106.000 | 128.000 | 147.000 | 158.000 | 476.000 | 635.000 | 794.000 | 952.000 |

Critical speed

In the ball-screw rack the critical speed is limited by the critical speed of the bearings.

Preloading

The screws are preloaded with the object of eliminating axial play, increasing rigidity and improving the accuracy of positioning.

To prevent life reduction, the preloading should be one-third of the mean load.

The preloading system designed is simple and may be implemented by the machine manufacturer and by the machine user.

Fig. 2 shows the preloading system. When the screwholder body has been fitted we carry out the preloading of the axial-radial bearing 4 on the left by means of the nuts 5A. The screwholder body is fitted on one of the modules and when it has been secured to the carriage or table of the machine the worms are preloaded by means of the nuts 5B on the right, shifting the right screw in the direction of the arrow F. When preloading the worms, account has to be taken of the preloading of the right axial-radial bearing.

Driving torque—Driving power

When torque is converted into linear movement, the torque required is given by the following formula:

$$Ta=\frac{F\times P}{2000\times\pi\times\gamma}(Nm)$$

When linear movement is converted into torque, the torque regenerated is as follows:

$$Te=\frac{F\times P\times\gamma'}{2000\times\pi}(Nm)$$

The power required is:

$$Pa=\frac{Ta\times n}{9550}(kW)$$

Ta=Torque to be produced (N).
Te=Torque generated (N).
Pa=Power (kW).
F=Load applied (N).
P=Pitch (mm).
n=Revolutions (min$^{-1}$).
$\gamma$=Efficiency ($\approx$0.85).
$\gamma'$=Efficiency ($\approx$0.75).

Efficiency

When torque is converted into linear movement:

$$r=\frac{\tan\alpha}{\tan(\alpha+p)}$$

7

When linear movement is converted into torque:

$$r=\frac{\tan(\alpha-\rho)}{\tan\alpha}$$

$$\tan=\frac{P}{Dp\times\pi}$$

$\rho$=Angle of friction.
$\alpha$=Angle of the thread.
P=Pitch.
Dp=Pitch circle diameter.

## Claims

1. A ball-screw rack device for converting a primary rotary motion produced by known means into a travel movement of a carrying body or machine, the device having:—

a) a guide element (15) for guidance of the carrying body or machine (17);

b) a screwholder body (3) which is secured to the carrying body or machine (17) to be moved, and which moves on the upper portion of the guide element (15);

c) a rack (7) secured to the guide element (15) and composed of a plurality of modular elements, the rack having an internal face shaped as a half-circumference with a helical or toothed groove formed therein;

d) a screw pinion (1, 2) mounted on the rack and having a mating helical groove (8) of the same pitch and angle as the helical or toothed groove (9) of the rack (7), the screw pinion (1, 2) being connected to and accommodated in the movable screwholder body;

e) a set of balls (11) accommodated in close succession in the groove (8) of the screw pinion (1, 2) and engageable in the groove (9) of the rack (7) for running engagement between the screw pinion (1, 2) and the rack (7); and

f) external running means which are connected to the screw pinion (1, 2) and via which a drive torque is imparted to the assembly in such manner that the rotational motion imparted to the screw pinion (1, 2) causes, by means of the running engagement of the screw pinion (1, 2) and the rack (7) the horizontal movement of the screw pinion (1, 2) and of the screwholder body (3) connected to the latter and, consequently, of the carrying body or machine (17) on the rack (7) characterised in that the screw pinion (1, 2) is made up of two endless worms connected to one another longitudinally, the modular elements of the rack (7) are adjustable relative to each other, the screwholder body (3) is supported by runners (12) which vary in number depending on the load capacity requirements, which are mounted on strips (13) secured to the screwholder body (3) and which run on tracks (14) carried by the rack elements (7) and the guide element (15) is formed with flanges (16) for the guidance of the carrying body or machine (17).

2. A ball-screw rack device according to claim 1 characterised in that the tracks (14) are arranged with bearing surfaces in planes inclined to both the horizontal and vertical planes through the axis of the screw pinion (1, 2) so as to transmit both axial or radial forces.

3. A ball-screw rack device according to claim 1 characterised in that the tracks (14) are each provided by two sets of tracks with the bearing surfaces of one set parallel to the horizontal plane and the other set parallel to the vertical plane so that one set transmits the axial forces and the other set the radial forces.

4. A ball-screw rack device according to claim 1, 2 or 3 characterised in that each section of rack has at its longitudinal ends a lower recess into which is screwed an adjusting screw which has its head abutting against the adjacent section and can be turned to achieve an exact setting of the spacing or dimensioning of the rack, all this being in order to achieve a constant engagement pitch which ensures accurate operation.

## Patentansprüche

1. Kugelumlauf-Zahnstangengerät zum Umwandeln einer mit Hilfe bekannter Mittel erzeugten primären Drehbewegung in eine Fahrbewegung eines Trägerkörpers oder einer -maschine mit

a) einem Führungselement (15) zur Führung des Trägerkörpers oder der -maschine;

b) einem an dem zu bewegenden Trägerkörper oder der -maschine (17) befestigten Schraubenhalterkörper (3), der sich auf dem oberen Abschnitt des Führungselementes (15) bewegt;

c) einer an dem Führungselement (15) befestigten und aus einer Vielzahl modularer Elemente zusammengesetzten Zahnstange (7), die eine als Halbumfang ausgebildete Innenfläche mit einer darin gebildeten schraubenförmigen oder gezahnten Nut aufweist;

d) einem auf der Zahnstange angeordneten Schraubenzapfen (1, 2) mit einer übereinstimmenden schraubenförmigen Nut (8) mit der gleichen Ganghöhe und dem gleichen Winkel wie die schraubenförmige oder gezahnte Nut (9) der Zahnstange (7), wobei der Schraubenzapfen (1, 2) mit dem bewegbaren Schraubenhalterkörper verbunden und in diesem untergebracht ist;

e) einem Salz von in dichter Folge in der Nut (8) des Schraubenzapfens (1, 2) untergebrachten und die Nut (9) der Zahnstange (7) zum laufenden Eingriff zwischen dem Schraubenzapfen (1, 2) und der Zahnstange (7) in Eingriff bringbaren Kugeln (11);

f) äußeren Läufereinrichtungen, die mit dem Schraubenzapfen (1, 2) verbunden sind und durch die der Anordnung eine Antriebsdrehung derart auferlegt wird, daß die dem Schraubenzapfen (1, 2) mitgeteilte Drehbewegung mit Hilfe des laufenden Eingriffes des Schraubenzapfens (1, 2) und der Zahnstange (7) die horizontale Bewegung des Schraubenzapfens (1, 2) und des mit diesem verbundenen Schraubenhalterkörpers (3) und daher des Trägerkörpers oder der -maschine (17) auf der Zahnstange (7) verursacht, dadurch gekennzeichnet, daß der Schraubenzapfen (1, 2) aus zwei miteinander in Längsrichtung verbundenen endlosen Schnecken gebildet ist, die modularen Elemente der Zahnstange (7) relativ zueinander einstellbar sind, der Schraubenhalterkörper (3) durch Läufer (12) getragen wird, die in ihrer Anzahl in Abhängigkeit von den Belastungsfähigkeitserfordernissen variieren und auf an dem Schraubenhalterkörper (3) befestigten Streifen angeordnet sind und auf von den Zahnstangenelementen (7) getragenen Bahnen (14) laufen, und das Führungselement (15) mit Flanschen (16) zur Führung des Trägerkörpers oder der -maschine (17) gebildet ist.

2. Kugelumlauf-Zahnstangengerät nach Anspruch 1, dadurch gekennzeichnet, daß die Bahnen (14) mit tragenden Oberflächen in Ebenen angeordnet sind, die sowohl gegenüber der horizontalen als auch der senkrechten Ebene durch die Achse des Schraubenzapfens (1, 2) schräg verlaufen, um dadurch sowohl axiale als auch radiale Kräfte zu übertragen.

3. Kugelumlauf-Zahnstangengerät nach Anspruch 1, dadurch gekennzeichnet, daß die Bahnen (14) jeweils mit zwei Sätzen von Bahnen versehen sind, wobei die tragenden Oberflächen eines Satzes parallel zu der horizontalen Ebene und der andere Satz parallel zu der senkrechten Ebene sind, so daß ein Satz die Axialkräfte und der andere Satz die Radialkräfte überträgt.

4. Kugelumlauf-Zahnstangengerät nach Anspruch 1, 2 oder 3, dadurch gekennzeichnet, daß jeder Zahnstangenabschnitt an seinen Längsenden eine untere Ausnehmung aufweist, in die eine Einstellschraube eingeschraubt ist, deren Kopf an dem benachbarten Abschnitt anliegend angeordnet ist und die gedreht werden kann, um eine exakte Einstellung des Abstandes oder der Dimension der Zahnstange zu erreichen, all dies um eine konstante Eingriffsganghöhe zu gewährleisten, die einen korrekten Betrieb gewährleistet.

## Revendications

1. Mécanisme à vis à billes et crémaillère pour transformer un mouvement de rotation primaire, produit par tout moyen connu, en un mouvement de déplacement d'un élément support ou d'une machine, mécanisme comprenant:

a) un élément de guidage (15) pour l'élément support ou la machine (17)

b) un corps support de vis (3), qui est fixé à l'élément support ou à la machine (17) devant être déplacé et qui se déplace sur la partie supérieure de l'élément de guidage (15);

c) une crémaillère (7), fixée à l'élément de guidage (15) et constituée d'une pluralité d'éléments modulaires, la crémaillère présentant une face interne en forme de demi-circonférence dans laquelle a été formée une rainure hélicoïdale ou munie de dents;

d) un pignon à vis (1, 2), monté sur la crémaillère et comportant une rainure hélicoïdale d'accouplement (8) ayant le même pas et le même angle que la rainure hélicoïdale ou munie de dents (9) de la crémaillère (7), le pignon à vis (1, 2) étant relié et adapté au corps du support de vis mobile;

e) un jeu de billes (11), logées les unes à la suite des autres de façon rapprochée dans la rainure (8) du pignon à vis (1, 2) et venant s'engager dans la rainure (9) de la crémaillère (7) pour être en prise, en déplacement, entre le pignon à vis (1, 2) et la crémaillère (7) et

f) des moyens de déplacement externes qui sont reliés au pignon à vis (1, 2) et par l'intermédiaire desquels on communique un couple de commande au système de manière que le mouvement de rotation communiqué au pignon à vis (1, 2), entraîne, en raison de l'engagement en déplacement du pignon à vis (1, 2) et de la crémaillère (7), le mouvement horizontal du pignon à vis (1, 2) et du corps du support de vis (3) relié à ce dernier et, par conséquent, de l'élément support ou de la machine (17) sur la crémaillère (7), caractérisé en ce que: le pignon à vis (1, 2) est constitué de deux pas de vis sans fin reliés l'un à l'autre longitudinalement, les éléments modulaires de la crémaillère (7) sont réglables l'un par rapport à l'autre, le corps du support de vis (3) est supporté par des longerons (12) dont le nombre varie en fonction des exigences de la capacité de charge, qui sont montés sur des bandes (13), fixées au corps du support de vis (3) et qui se déplacent sur des voies (14) portées par les éléments de crémaillère (7) et l'élément de guidage (15) est muni de flasques (16) pour assurer le guidage du corps support ou de la machine (17).

2. Mécanisme à vis à billes et crémaillère selon la revendication 1, caractérisé en ce que les voies (14) sont munies de surfaces de support dans des plans inclinés à la fois par rapport aux plans horizontal et vertical passant par l'axe du pignon à vis (1, 2) de manière à transmettre à la fois les forces radiales ou axiales.

3. Mécanisme à vis à billes et crémaillère selon la revendication 1, caractérisé en ce que les voies (14) sont munies chacune de deux jeux de voies, les surfaces de support d'un jeu étant parallèles au plan horizontal et celles de l'autre jeu étant parallèles au plan vertical de manière qu'un jeu transmette les forces axiales et l'autre jeu les forces radiales.

4. Mécanisme à vis à billes et crémaillère selon les revendications 1, 2 caractérisé en ce que chaque section de crémaillère possède, à ses extrémités longitudinales, un évidement inférieur dans lequel est vissée une vis de réglage dont la tête est en butée contre la section adjacente et peut être entraînée en rotation de manière à obtenir un réglage exact de l'espacement ou du dimensionnement de la crémaillère, tout ceci pour obtenir un pas d'engagement constant qui assure un fonctionnement précis.

FIG. 1

FIG. 2

FIG. 3

FIG. 4

FIG. 5

FIG. 6

FIG. 7

FIG. 8